# EUROPEAN PATENT SPECIFICATION

(11) **EP 1 528 795 B1**
(45) Date of publication and mention of the grant of the patent: **13.08.2008**
(21) Application number: 04025758.6
(22) Date of filing: 29.10.2004
(51) Int. Cl.: H04N 5/00, H04N 5/445, H04N 7/173

(54) **Method and apparatus for digital video distribution**
Verfahren und Vorrichtung zur digitalen Videoverteilung
Procedé et système pour la distribution video numerique

(30) Priority: 31.10.2003 JP 2003372453
(43) Date of publication of application: 04.05.2005
(73) Proprietor: KABUSHIKI KAISHA TOSHIBA, Tokyo 105-8001 (JP)
(72) Inventor: Nonoyama, Akihiro, Minato-ku Tokyo 105-8001 (JP)
(74) Representative: Henkel, Feiler & Hänzel

(56) References cited:
- WO-A2-20/04019602
- US-A1- 2003 093 790

## Description

The present invention relates generally to a system for realizing a digital video distributing service, particularly to a digital video distributing system comprising a service function of providing a summarized video.

In recent years, practical use of digital video distributing systems has been promoted which realize services of distributions of digital video content (hereinafter referred to simply as video content) required by audiences utilizing digital networks of broadband.

As the digital video distributing services, realizations of not only a basic service of distributing the video content (including sound data) but also various other services have been proposed. Especially, for example, an information providing service has been proposed in which video content metadata (hereinafter referred to as the video metadata) is prepared utilizing a metadata preparing method by MPEG-7 standards and in which the video metadata is used.

Concretely, for example, a service has been proposed in which digest information (associated information) summarizing program content up to an interrupted place is prepared and distributed to audiences in the case of interruption of viewing of a program in a video content distributing service by digital broadcasting (see, for example, Jpn. Pat. Appln. KOKAI Publication No. 2003-163918).

As a digital video distributing service, besides the basic service of distributing the video content, a service has been proposed in which the digest information (associated information) of the video content is prepared and distributed to the audiences.

However, if there are services capable of not only distributing the digest information of the video content but also providing summarized video content prepared by summarizing (editing) the video content supposed to be especially useful for the audiences, useful and various digital video distributing services can be realized.

US 2003/0093790 discloses a system according to the üpre-characterizing part of claim 1. The system is adapted for utilizing metadata created either at a central location for shared use by connected users, or at each individual user's location, to enhance user's enjoyment of available broadcast programming content. A variety of mechanisms are employed for automatically and manually identifying and designating programming segments, associating descriptive metadata which the identified segments, distributing the metadata for use at client locations, and using the supplied metadata to selectively record and playback desired programming.

An object of the present invention is to provide a system for realizing a digital video distributing service to distribute summarized video content considered to be useful for audiences.

According to the present invention the above object is achieved by means of a system for distributing digital video data as recited in claim 1 and by a method of distributing digital video data according to claim 4 The dependent claims are directed to further advantageous aspects of the invention.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a constitution of a system which realizes a broadcasting type distributing service according to an embodiment of the present invention;
FIG. 2 is a flowchart showing a procedure of the broadcasting type distributing service according to the present embodiment;
FIG. 3 is a block diagram showing a constitution of a system which realizes a reserved type distributing service according to the present embodiment;
FIG. 4 is a block diagram showing a constitution of a system which realizes a searching type distributing service according to the present embodiment;
FIG. 5 is an explanatory view of linking between content elements in a service linking function according to the present embodiment;
FIG. 6 is a diagram showing a concept model of a content group of the service linking function;
FIG. 7 is an explanatory view of the linking between the content groups in the service linking function;
FIG. 8 is a block diagram showing a concrete constitution of a digital video distributing system according to the present embodiment;
FIG. 9 is a block diagram showing a main part of a summarized video distributing system according to the present embodiment;
FIG. 10 is a flowchart showing a procedure of a summarized video distribution process in an EPG program according to the present embodiment;
FIGS. 11 to 13 are explanatory views of a judgment method by a viewing situation in a case where a summarized video is provided according to the'present embodiment;
FIGS. 14 to 16 are explanatory views of a selecting and providing method in a case where the summarized video is provided;
FIG. 17 is a diagram showing one example of a service selection initial screen of a client according to the present embodiment;
FIGS. 18 and 19 are diagrams showing one example of a content selection screen of the client;
'FIG. 20 is an explanatory view of an operation key of a remote controller of the client;
FIG. 21 is an explanatory view of a software constitution of the client;
FIGS. 22 to 25 are diagrams showing one example of viewing history information according to the present embodiment;
FIG. 26 is a flowchart showing a procedure of a preparation process of the summarized video content according to the present embodiment; and
FIG. 27 is a flowchart showing a process procedure of a log program of the client according to the present embodiment.

An embodiment of the present invention will be described hereinafter with reference to the drawings.

### (Basic System of Digital Video Distributing Service)

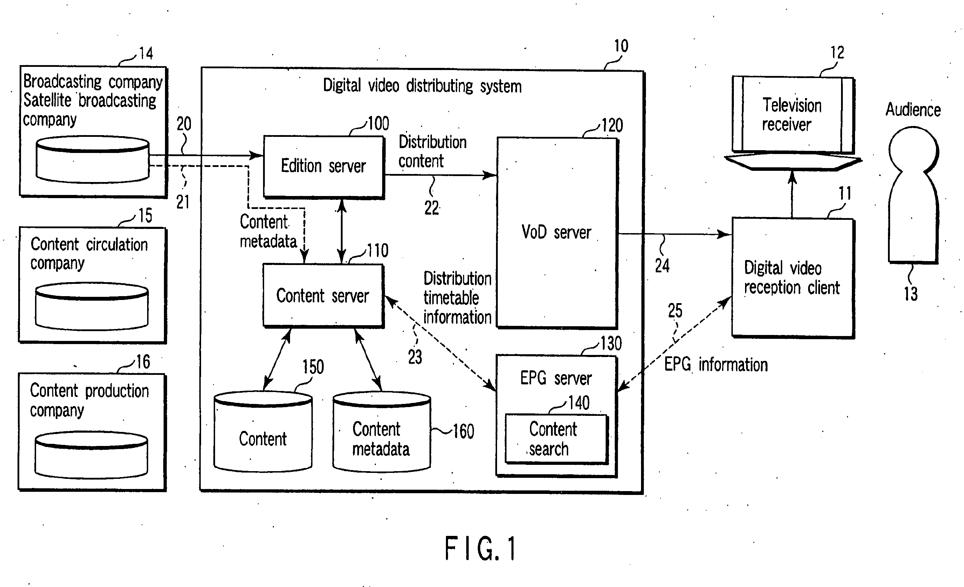

FIGS. 1, 3, 4 are block diagrams showing a constitution of a system which realizes a digital video distributing service according to the present embodiment.

FIG. 1 shows a constitution of a digital video distributing system which realizes a broadcasting type distributing service. This service is characterized by content distribution organization set on a broadcasting company 14 side, and selecting of content to be viewed from distribution timetable information 23 by an audience 13.

The present system 10 has an edition server 100 described later, a content server 110, a video-on-demand (VoD) server 120, and an electronic program guide (EPG) server 130.

Companies which provide video content also include a content circulation company 15 and a content production company 16 in addition to the broadcasting company 14. On the other hand, the audience 13 operates a digital video reception client (hereinafter referred to simply as the client) 11 to view video content by an image display unit 12 such as a television receiver. The client 11 is a terminal device called a set top box or a home server connected to a video distributing system 10 via broadband transmission media such as optical cable and ADSL.

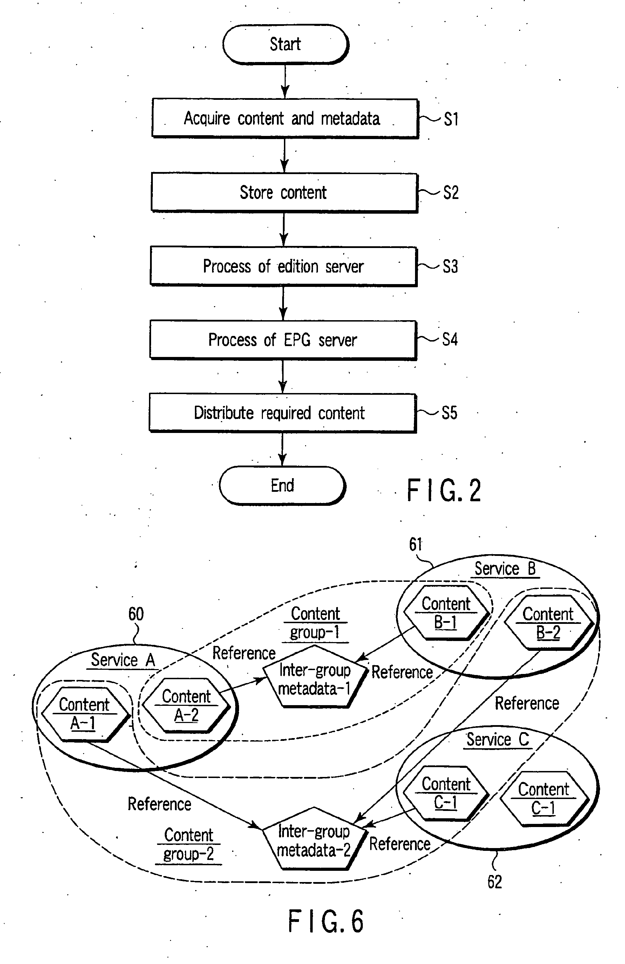

A procedure for realizing the distributing service of the present system will be described with reference to a flowchart of FIG. 2.

The present system 10 receives video content data 20 and video metadata 21 transmitted from the broadcasting company 14 in real time (step S1). The content server 110 accumulates the video content data 20 in a content database 150, accumulates the video metadata 21 in a content metadata base (metadata database) 160, and temporarily or permanently stores the data (step S2).

On acquiring video content data 22 which is a distribution object via the content server 110, the edition server 100 transfers the data to the VoD server 120 (step S3). In contrast, the EPG server 130 has a content searching database (hereinafter sometimes the content searching DATABASE) 140, and exchanges EPG information 25 with respect to the client 11 (step S4). The EPG server 130 acquires the distribution timetable information 23 prepared using the video metadata from the content server 110.

The VoD server 120 distributes video content data 24 transmitted from the broadcasting company 14 in real time in response to a request from the audience 13 via the client 11 (step S5).

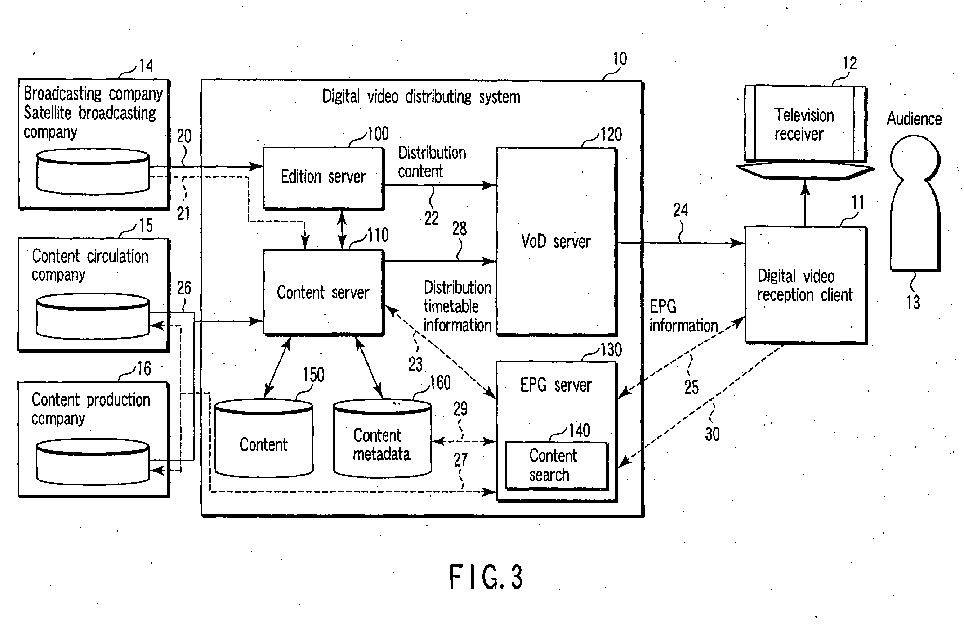

FIG. 3 shows a constitution of the system 10 which realizes a reserved type distributing service.

In this service, the audience 13 sets viewing content request information 30 constituted of a keyword, content information (category, performers, etc.) and the like to the EPG server 130 via the client 11. The companies 15, 16 sides select video content data 26 and video metadata 27 based on the setting to supply the data to the system 10.

It is to be noted that in the present system 10, the EPG server 130 searches and acquires video metadata 29 of the distribution object from the metadata database 160. The content server 110 transfers video content data 28 of the distribution object to the VoD server 120.

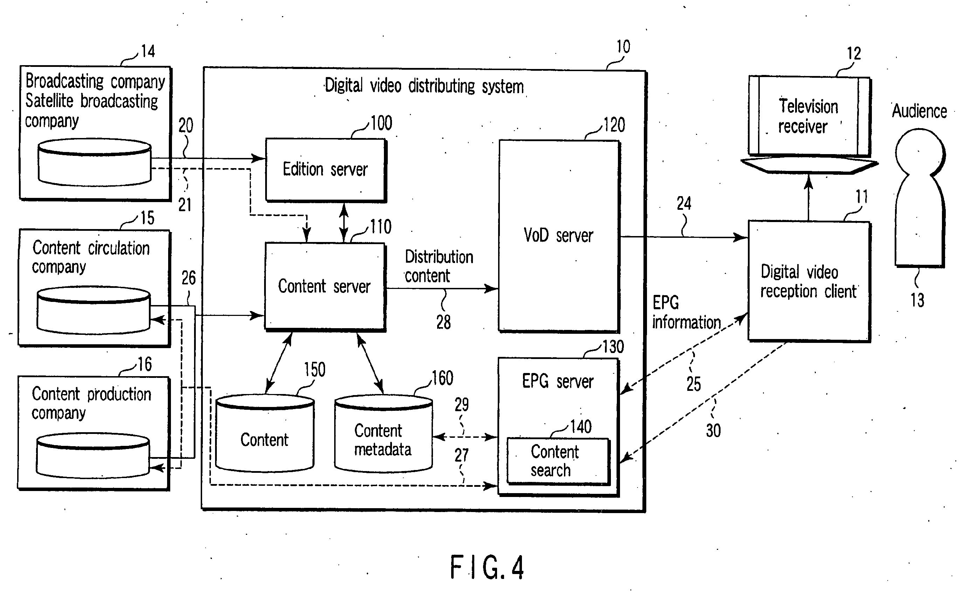

FIG. 4 shows a constitution of the system 10 which realizes a searching type distributing service.

In this service, the audience 13 operates the client 11 to set information 31 for searching content to be viewed to the EPG server 130 as occasion demands. The EPG server 130 accumulates the video metadata 29 provided from the companies 15, 16 sides in the metadata database 160. Accordingly, the audience 13 realizes a service capable of searching the content to be viewed from the database on the companies 15, 16 sides as occasion demands via the EPG server 130, and selecting the content to be viewed from the database.

The following added value service can be provided with respect to the above-described basic video distributing service.

Concretely, a content providing service is provided in accordance with audience's tastes to propose optimum content to the audience by audience's content taste information. The service provides a customizing function of setting the basic service, setting a priority level of utilization, or simultaneously utilizing a plurality of basic services. Furthermore, a searching service is provided having an agent function of searching not only a content database in the company but also a content database published by another company or on internet as objects, or monitoring the content until the searching object appears. Additionally, there is a video-on-demand service providing a function of realizing various viewings such as interrupting or resuming of the viewing, multiple/double speed reproducing, and index searching in all content except some real-time content (broadcasting content directly re-transmitted from a broadcasting station).

Next, in addition to the video content distributing service (basic and added value), the following service can be provided.

Concretely, peer to peer (P2P) communication services are provided such as IP telephony services including VoIP,.video chatting, and messenger. An area information exchange service is provided to exchange living information such as public service information, area information including event information, and bargain information of shopping centers and supermarkets, and various information such as community information among area groups or individuals. Furthermore, an electronic settlement service directly linked with the respective services is provided. Additionally, there are provided: a distributing service of advertisement exclusive content; advertisement linked or associated with the respective services; and an introducing service of advertisements or goods, which is a service to search the goods from the information linked or associated with the respective services.

### (Linking Function between Services)

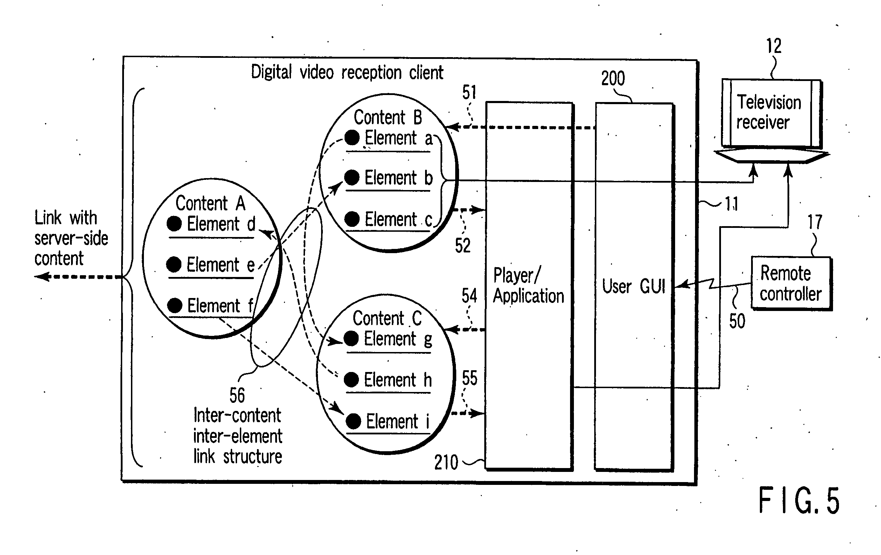

FIGS. 5, 6, 7 show a linking function realized between the above-described services.

In the linking among the services, a synchronous process or data exchange between the above-described services, link between information and the like are realized. For example, a charging process concerning content viewing is linked between the content distributing system and a charging system. Advertisement content is inserted into distribution content between the distribution content and the advertisement content, or a synchronous process of advertisement content distribution is linked.

Models which realize the linking between the respective services will be described with reference to FIGS. 5, 6, 7.

FIG. 5 shows a model of the linking between content elements in a service linking function.

Here, the client 11 is provided with each software of a user graphical user interface (GUI) 200 to accept a request 50 of the audience 13 via an operation remote controller 17, and a player program (player/application) 210 which reproduces video content.

The video content (A, B, C) is structured by video metadata, and defined to be constituted of elements of the video metadata and content data (e.g., video/sound data, etc.).

Here, the video metadata is data associated with the video content, in which a description method is defined standards such as MPEG-7. That is, the video metadata is data prepared from "data" constituting multimedia content extracted as "characteristic data" beforehand from multimedia content and utilized in order to use "characteristics" which are keys in searching the multimedia content as searching data. For example, concerning the characteristics of human recognition levels, tool sets for describing structures of content or meanings of the content are defined including description tool sets such as titles of multimedia/content, production associated information of producers, use modes, and media modes.

On the other hand, concerning characteristics of signal processing levels, tool sets for describing colors, shapes, patterns, movements and the like of visual objects captured by video content is defined. Concerning sound content, tools are defined by which it becomes possible to describe low-level characteristics such as power and spectrum to high-level characteristics such as melody, and information concerning occurrence probability of phoneme for use in sound recognition or the like. In this manner, description methods are consistently provided including the description of the high-level characteristics of human recognition to the description of the low-level characteristics automatically obtained by signal processing.

A link with the content or a link between the elements is realized by the elements of the video metadata. The link is a physical or logical index (pointer) with respect to the elements which are data, and all the content, and is mounted, for example, in URL, URI specifications such as HTML, XML languages.

As shown in FIG. 5, in the linking between the content elements, content elements 53 are illustrated on a screen of the television receiver 12 with respect to the audience, and among the element, content of a link destination based on a link structure 56, or elements in the content are provided concerning elements 51 selected by the audience's request 50.

The player program 210 makes a start-up request 54 of link destination content in response to a request 52 for the content of the link destination. The player program 210 accepts a start-up 55 of the content in response to the request 54.

In an example of the linking between the content elements, in a case where the audience designates an article (e.g., a car) used in certain content via the user GUI 200 of the client 11, a series of process is performed in which the system guides the audience to advertisement content of the car, associated with the element (distributing and viewing of the advertisement content). In another example, when the audience designates a star appearing against certain content via the user GUI 200 of the client 11, the searching service is started, and it is possible to search other content against which the designated star appears. This is realized, when content metadata elements (performers) are linked with the searching service (the service is also one mode of the content) constituting the other content.

FIG. 6 shows a concept model of content groups (1, 2) in the linking among services (A, B, C) 60 to 62.

The service presented to the audience is defined as content set including several content. The linking between the content groups realizes the linking with respect to the content set in a certain service, or a linking service of the content set among a plurality of services.

The linking of the content group realizes, for example, a relation such as "brand" constituted to unify a commercial product image, and realizes uniform association among a plurality of content or services, or a group relation. The linking between the content groups does not adopt a mode in which the content are directly connected to each other as in the above-described linking between the content elements, and is realized by allowing the content to share metadata among common groups. The metadata between groups is used to perform presentation of an additional service or advertisement on the company side with respect to the content service selected by the audience.

In the metadata between the groups, association between the services or the content set on the company side, and the linking service to perform are described. When the inter-group metadata registered in certain content is searched and called, service start requests are issued with respect to the respective content of the groups registered in the metadata.

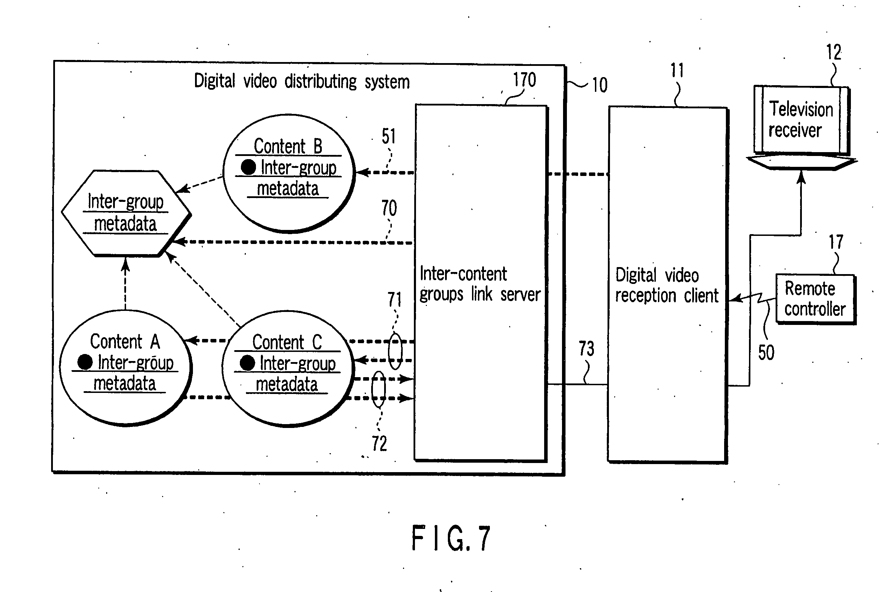

Concretely, as shown in FIG. 7, the linking between the content groups is realized by a linking server 170 mounted on the system 10. The linking server 170 refers to inter-group metadata 70, and issues a request 71 for the start-up of the group content. The linking server 170 receives the start-up of the content in response to the request 71 to execute presentation 73 of the linking service.

### (Main Part of Digital Video Distributing System)

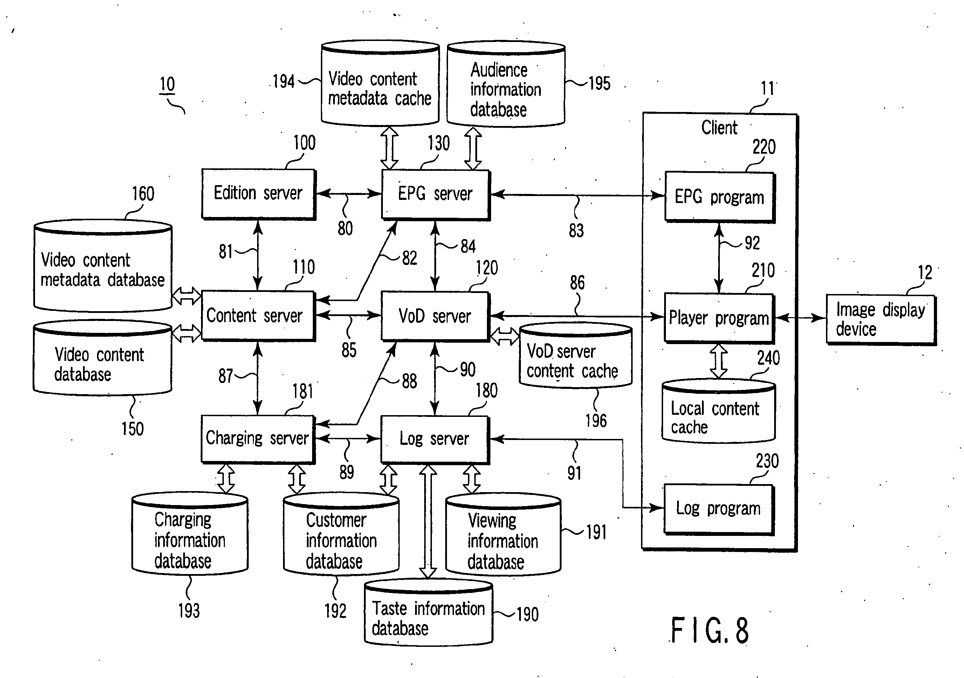

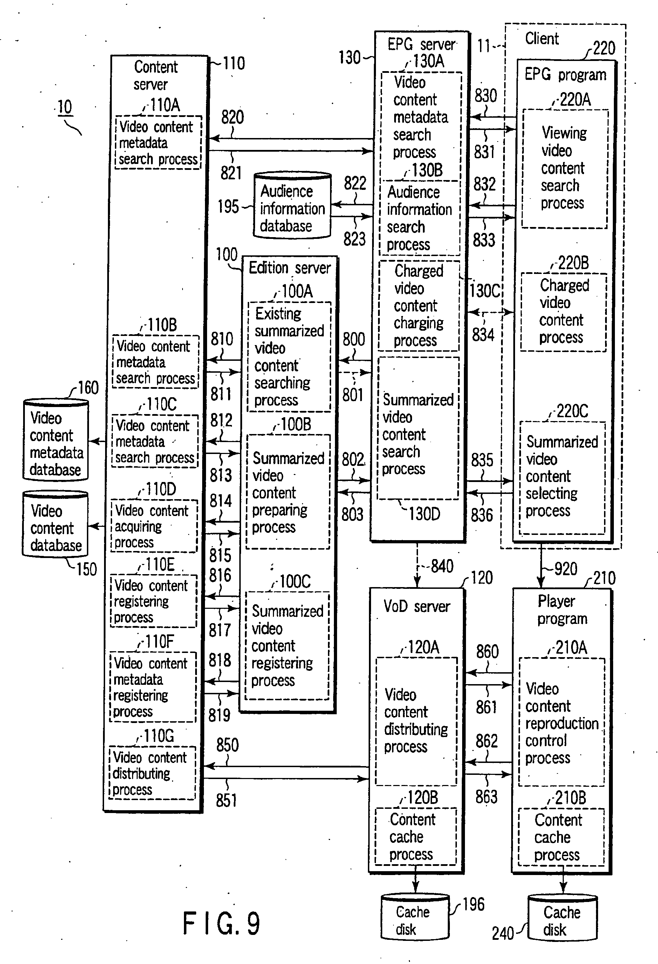

FIG. 8 is an explanatory view of a concrete constitution (hardware and software) of the digital video distributing system 10 according to the present embodiment. FIG. 9 is a diagram showing a main part of a summarized video distributing system included in the system.

As shown in FIG. 8, the present system 10 has an edition server 100, content server 110, EPG server 130, log server 180, and charging server 181 in addition to the VoD server 120 which distributes the video content in response to the request of the client 11.

### (Client)

The client 11 is a terminal which displays the video content distributed from the system 10 in the image display device (television receiver, etc.) 12 to present the content to the audience. The client 11 mounts and executes an EPG program 220, a player program 210, and a log program 230.

The image display device 12 includes a liquid crystal display device contained in the client 11, a CRT monitor and the like in addition to the television receiver corresponding to the image display device of broadcasting signals (NTSC, PAL, SECAM, etc.).

The EPG program 220 provides GUI (200) for the audience to select the program, acquires video metadata 83 of video content from the EPG server 130 by the audience's operation, and presents the data to the audience. Concretely, the metadata is presented on the screen of the image display device 12. Furthermore, the EPG program 220 notifies a viewing request 92 of the video content selected by the audience together with the video metadata to the player program 210.

The player program 210 accesses a local content cache disk 240, and receives the video content distributed from the VoD server 120 (86). The player program 210 acquires the video metadata designated by the audience from the EPG program 220, and transmits a distribution request 86 of the video content to the VoD server 120. The player program 210 cooperates with the VoD server 120 to execute special reproduction of the video content by the audience's operation.

The log program 230 acquires log (history information) of a video distribution process from operation histories of the player program 210 and the EPG program 220. Concretely, the log program 230 collects the audience (subscriber, family, etc.) which is audience information, purchase information (contract, credit information), video metadata of the distributed video content, viewing history (start time, interruption start time, interruption end time, end time, viewing times, etc.), advertisement viewing history, summarized video viewing history and the like, and stores these information.

On the other hand, the EPG server 130 of the distributing system 10 provides the metadata of the video content distributable to the client 11. The EPG server 130 provides services to search the distributable video content, the video metadata of the video content and the like by the request of the EPG program 220 of the client 11.

The EPG server 130 requires and acquires the video metadata of the video content with respect to the content server 110 (82). The EPG server 130 stores the acquired video metadata in a cache disk 194. The EPG server 130 stores and manages audience information (EPG setting information, EPG operation history, video content viewing information, summarized video content viewing information) for each audience in an audience information database 195.

The log server 180 is a server which collects reception information of the content distributed from the client 11, information of charged content purchased by the audience and the like for checking audience's viewing tendencies or for a charging process. The log server 180 collects distribution situations of the video content from the VoD server 120 to the client 11 for each audience, and stores the situations in a viewing information database 191.

Moreover, the log server 180 acquires viewing information or viewing history information of the video content viewed by the audience from the log program 230 of the client 11, and stores the information in the viewing information database 191. Furthermore, the log server 180 acquires audience customer information from a customer management database 192, and stores the viewing information for each customer in the viewing information database 191. The log server 180 prepares taste information with respect to the video content for each audience from the viewing information of each audience to store the information in a taste information database 190.

The charging server 181 acquires viewing information 89 for each customer from the log server 180, prepares charging information, and stores the information in a charging information database 193. The charging server 181 acquires contract information 87 such as content prices as the video metadata of the video content from the content server 110 for calculation of charged prices.

The VoD server 120 distributes video content 85 acquired from the content server 110 in response to a video content distribution request of the player program 210 of the client 11 (86). The VoD server 120 executes special reproduction such as temporary stop, stop, reproduction, fast forwarding, and rewinding in response to a special reproduction request from the player program 210 of the client 11.

The content server 110 manages the content DATABASE 150 to store the video content, the metadata DATABASE 160, and an advertisement content database to store advertisement content. The content server 110 acquires the video content from the content DATABASE 150 to transmit the content to the VoD server 120 in response to the request of the VoD server 120.

The content server 110 acquires the video metadata from the metadata DATABASE 160 to transmit the data to the EPG server 130 in response to the request of the EPG server 130 (82). Furthermore, the content server 110 acquires the video metadata from the metadata DATABASE 160 to transmit the data to the charging server 181 in response to the request of the charging server 181.

### (Edition Server and Summarized Video Distributing System)

The edition server 100 prepares summarized video content data (hereinafter referred to as the summarized video content), and summarized video content metadata (referred to as the summarized video metadata) in response to a request 80 from the EPG server 130. The edition server 100 acquires the video content and video metadata from the content server 110.

The edition server 100,executes a summarized video editing process based on the audience information and the video metadata of the video content acquired from the EPG server 130 (81). Furthermore, the edition server 100 registers the summarized video content and the summarized video metadata in the content server 110 after the editing process.

FIG. 9 shows a constitution (hardware and software) of a summarized video distributing system on the digital video distributing'system 10.

The summarized video distributing system is realized by the edition server 100, content server 110, VoD server 120, and EPG server 130, and has a function of executing the following process.

### (Process of Searching Condition of Video Content)

The EPG program 220 of the client 11 includes a summarized video content selecting process unit 220C, in addition to a viewing video content searching process unit 220A and a charged video content process unit 220B. The viewing video content searching process unit 220A executes a searching request 830 of the video content by audience operation.. At this time, the searching process unit 220A requires the video metadata of searching object content with respect to the EPG server 130.

The EPG server 130 has a metadata searching process unit 130A, an audience information searching process unit 130B, a charged video content charging process unit 130C, and a summarized video content searching process unit 130D. The audience information searching process unit 130B searches audience information of the audience who requests the searching of the metadata from the audience information database 195 (822), and acquires the audience information (823).

The EPG server 130 prepares searching conditions (including a taste tendency or the like inherent in the audience) to search the metadata from the acquired audience information. Furthermore, the metadata searching process unit 130A adds the searching condition, and requests the searching process of the metadata with respect to the content server 110 (820).

On receiving the request, a metadata searching process unit 110A of the content server 110 searches the corresponding video metadata from the metadata database 160, and responds to the EPG server 130 (821).

### (Acquiring of Video Content Arrangement Information)

The EPG server 130 adds arrangement information of the video content from the audience information of the audience information database 195 with respect to the video metadata from the content server 110. The video content are disposed in one of the video content database 150 of the content server 110, a content cache 196 of the VoD server 120, and a local content cache 240 of the client 11 in an optimum manner. The arrangement information of the video content is stored as one of the audience information in the audience information database 195.

### (Response of Searching Result)

The EPG server 130 returns the video metadata to the EPG program 220 of the client 11 (833). The EPG program 220 presents a list of search results to the audience.

### . (Presentation of Detailed Information of Video Content)

The audience selects the content from the list of searching results of the EPG program 220. The EPG program 220 acquires detailed information of the video content metadata held in the client 11, or detailed information of the video metadata held by the EPG server 130, and presents the information to the audience.

### (Searching of Summarized Video Content)

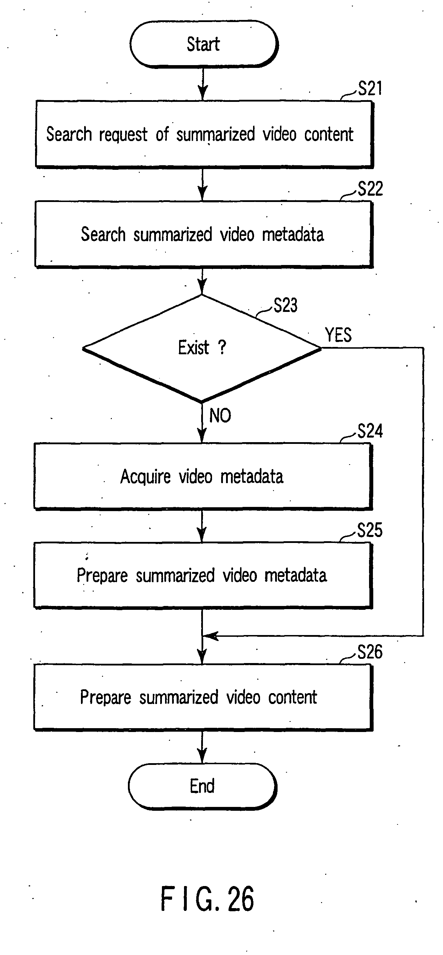

Next, a process procedure concerning the summarized video content of the present embodiment will be described with reference to a flowchart of FIG. 26 together with FIG. 9.

The edition server 100 provides the summarized video content and the summarized video metadata in response to a search request 800 of the summarized video content from the EPG server 130 (801, 802). The edition server 100 has an existing summarized video content search process unit 100A, a summarized video content preparing process unit 100B, and a summarized video content registering process unit 100C.

The EPG server 130 executes the search request 800 for the summarized video content with respect to the edition server 100 in accordance with a viewing request notice 836 from the summarized video content selecting process unit 220C of the client 11 (step S21). Additionally, when the charged video content process unit 220B of the client 11 purchases charged video content, the EPG server 130 performs a search process of the summarized video metadata from the video metadata presented to the audience.

The EPG server 130 notifies the edition server 100 of the video metadata and the audience information as the search information. The edition server 100 executes a search process (810) of the summarized video metadata in accordance with the video metadata of the video content (step S22).

A metadata searching process unit 110C of the content server 110 searches the corresponding summarized video metadata from the metadata DATABASE 160. The content server 110 returns the search results of the summarized video metadata to the edition server 100 (811).

The edition server 100 returns search results 802 of the summarized video metadata to the EPG server 130 in a case where the existing summarized video metadata exists (YES in step S23).

### (Preparing Process of Summarized Video Content)

The edition server acquires the metadata of the video content from the side of the content server 110 in a case where the existing summarized video metadata does not exist (812, 813, NO in S23, S24).

The edition server 100 prepares preparable summarized video metadata from the video metadata (hierarchical structure (chapter, marker, edition information, etc) of the video content defined, for example, by MPEG-7 standards, or signal information (hierarchical object of an image, behaviors of object over scenes, etc.)) of the video content acquired from the content server 110 (step S25).

Furthermore, the edition server 100 acquires the video content corresponding to the video metadata of the video content from the content server 110 (814, 815).

The edition server 100 determines styles of the summarized video content in accordance with the audience taste tendency based on the audience information, and adds the information to the preparable summarized video metadata. The edition server 100 notifies the EPG server 130 of the summarized video metadata (802).

### (Presentation of Summarized Video Metadata)

The EPG server 130 notifies the summarized video metadata to the EPG program 220 of the client 11 (835). The EPG program 220 presents the summarized video metadata as a list of summarized video content to the audience.

### (Selection of Summarized Video Content)

The summarized video content selecting process unit 220C of the client 11 notifies the EPG server 130 of the selected summarized video metadata in accordance with an instruction from the audience (836). The EPG server 130 notifies the edition server 100 of the, selected summarized video metadata (803).

### (Preparing Process of Summarized Video Content)

The edition server 100 prepares the summarized video content from the video content in accordance with the notified summarized video metadata (step S26). The edition server 100 registers the summarized video metadata in the cache disk 196 via a content cache process unit 120B of the VoD server 120. Furthermore, the edition server 100 registers the summarized video content and the summarized video metadata in the content server 110 (816 to 819).

### (Reproduction Request of Video Content)

The EPG program 220 of the client 11 notifies the player program 210 of the metadata of the video content selected by the audience or the summarized video metadata (920).

### (Process of Player Program)

The player program 210 acquires the arrangement information of the video content from the metadata (or the summarized video metadata) of the video content notified from the EPG program 220. A video content reproduction control process unit 210A starts reproduction of the video content from a local cache in a case where the video content exist in the local content cache 240.

In a case where the video content do not exist in the local content cache 240, the reproduction control process unit 210A requests the distribution of the video content with respect to the VoD server 120 (862). The VoD server 120 confirms whether or not the video content of the distribution request exists in the cache disk 196 via the content cache disk process unit 120B.

When the video content exist in the cache disk 196, a video content distributing process unit 120A of the VoD server 120 starts the distribution of the video content fetched from the cache disk 196 (863).

On the other hand, when the video content do not exist in the cache disk 196, the VoD server 120 notifies the content server 110 of the metadata of the video content, and requests the content server 110 to distribute the video content (850).

### (Video Content Distributing Process of Content Server)

A video content distributing process unit 110G of the content server 110 acquires the corresponding video content from the content DATABASE 150 to distribute the content to the VoD server 120 in response to the distribution request from the VoD server 120 (851).

### (Cache Process of VoD Server 120)

The VoD server 120 stores the video content distributed from the content server 110 in the content cache disk 196. Furthermore, the VoD server 120 distributes the video content to the player program 210 of the client 11 (863).

### (Video Content Reproducing Process of Player Program 210)

The player program 210 starts the reproduction of the video content distributed from the VoD server 120. The player program 210 switches the reproduction of the summarized video content and that of the video content by an audience operation request.

### (Summarized Video Distributing Process in EPG Program 220)

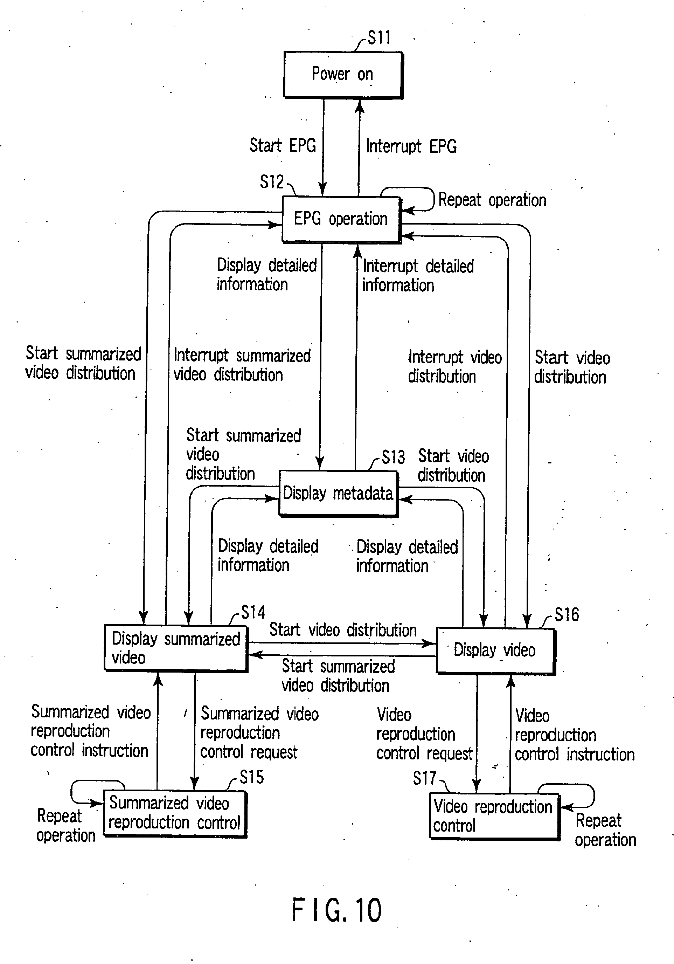

FIG. 10 is a flowchart showing a procedure of an operation of a summarized video distribution process in the EPG program 220 in a summarized video distributing system.

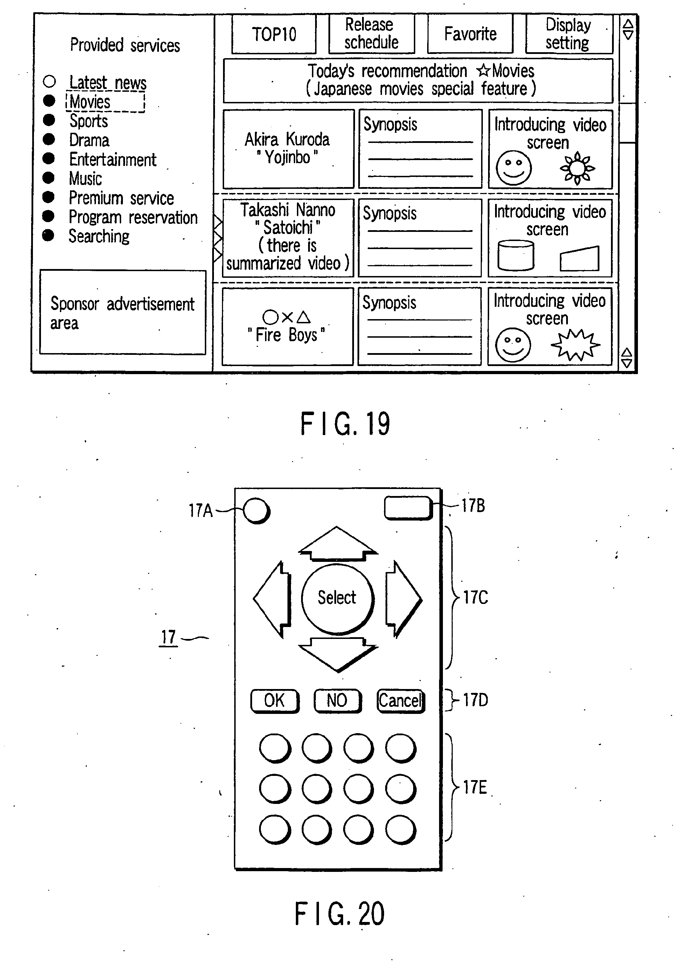

The audience sets the client 11 to be operable by an operation of a power button 17A of the remote controller 17 in order to use the client 11 (step S11). Here, as shown in FIG. 20, the remote controller 17 has an input switching key 17B, item selection keys 17C, determine/reject/interrupt keys 17D, and ten keys 17E, in addition to the power button 17A.

When the client 11 is brought into an operative state, the EPG program 220 is started, and brought into a waiting state to accept a request from the audience. That is, by the audience operation, the EPG program 220 transits to the following operation states.

### (1) EPG Operation (step S12)

When the video metadata of the video content is selected in this EPG operation, state transition to summarized video display, video display, and EPG operation is possible.

### (2) Metadata Display (step S13)

In the metadata data, the state transition to the summarized video display, video display, and EPG operation is possible.

### (3) Summarized Video Display (step S14)

The summarized video content corresponding to the video metadata of the video content selected by the EPG operation are reproduced/displayed.

### (4) Summarized Video Reproduction Control (step S15)

When an operation of summarized video display is performed, the state transition to the reproduction control of the summarized video content is possible. In the summarized video reproduction control, reproduction start, stop, temporary stop, fast forwarding, rewinding, movement to a table of content and the like are executed. An instruction for the state transition to the EPG operation and video display can be performed.

### (5) Video Display (step S16)

The video content corresponding to the video metadata of the video content selected by the EPG operation are reproduced/displayed. The summarized video display to the reproduction display of the video content are performed.

### (6) Video Reproduction Control (step S17)

When the operation of the video display is performed, the state transition to the reproduction control,of the video content can be performed.

In the video reproduction control, the reproduction start, stop, temporary stop, fast forwarding, rewinding, movement to the table of content of the video metadata and the like are executed. The instructions for the state transition to the EPG operation and video display can be performed.

### (Distinguishing System of Summarized Video)

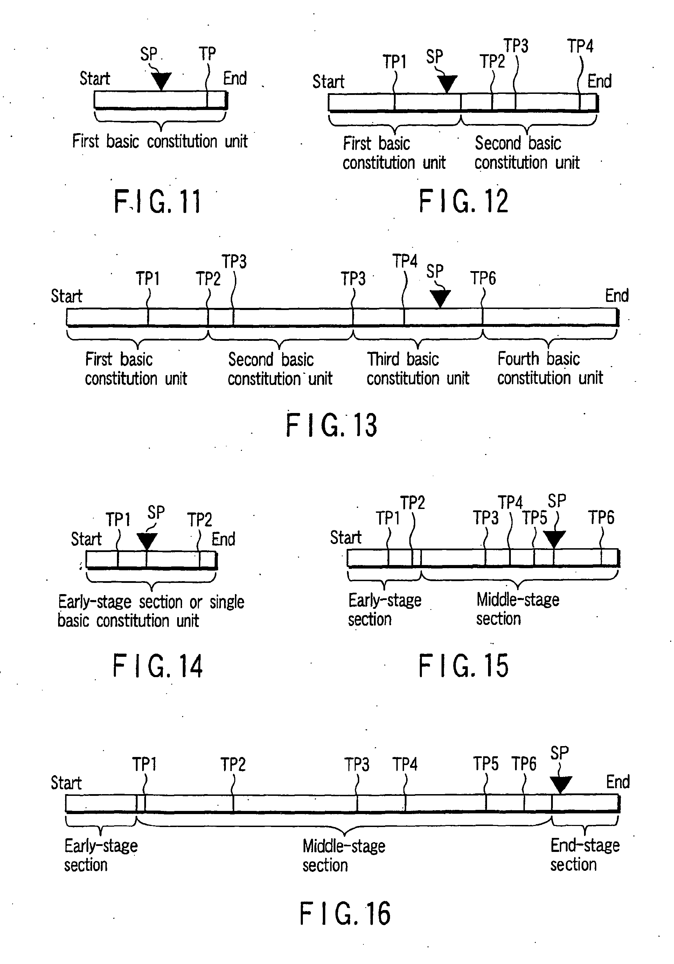

FIGS. 11, 12, 13 are explanatory views of a distinguishing system in a case where the summarized video according to the present embodiment is provided.

In the system for distinguishing the summarized video in the present embodiment, the viewing situations of the video content by the audience are used as distinction standards. That is, a degree of the viewing of the video content which is viewing objects by the audience is assumed as one of judgment standards.

Here, for example, in the MPEG-7 standards, it is possible to define and set content table (marker) information of the video content as the video metadata of the video content. As shown in FIGS. 11 to 13, the content table (marker) information includes position information (content table point TP) on the video content, position information (start, end positions) of a video content division indicated by the table of content'and the like. It is to be noted that in FIGS. 11 to 13, SP denotes information indicating a viewing interrupted position.

The content table (marker) information may be managed by setting hierarchical structures in the table of content. For example, the hierarchical structure includes "chapter", "section", "item" and the like for use in books. The content table (marker) information is intentionally prepared from scenario of the video content by a content producer. Therefore, progress of the video content (scenario) defined by the video metadata can be judged in accordance with a viewing time of the video content.

As a method of preparing basic summarized video content, the edition server 100 acquires the content table (marker) information from the video metadata in accordance with lengths of original video content, and viewing time of the audience (or viewing position in the video content). The video content from the start position (head) to the viewing position (TP) of the video content are re-edited to prepare the summarized video content.

Here, as a reference for preparing the summarized video content, the lengths of the video content are used as one of judgment standards. As references of the lengths of the video content, basic constitution units of the video content are defined by a length from several minutes for which the audience can substantially memorize the whole to around 15 minutes. It is assumed that the basic constitution unit can be defined by a video content unit by the content producer.

Moreover, the basic constitution unit of the video content includes at least one or more pieces of the content table (marker) information by the video metadata.

FIGS. 11 to 13 show classifications in a case where the basic constitution unit of the video content is set by a unit of 15 minutes. FIG. 11 shows a length of 15 minutes or less of the video content, for example, as in a cooling program or an information providing program. FIG. 12 shows a length of 30 minutes or less of the video content, for example, as in a drama and an educational program. FIG. 13 shows a length of 30 minutes or more of video content, for example, as in a drama, movies, and event relay broadcast program.

### (Method of Selecting and Providing Summarized Video Content)

FIGS. 14, 15, 16 are explanatory views of method of selecting and providing the summarized video content in accordance with the audience. Here, TP1 to TP6 denote content table points designated by the video metadata.

First, the video content constituted of a plurality of basic constitution units are additionally defined as follows.
(1) It is assumed that a first basic constitution unit of the video content including two or more basic constitution units is an early-stage section. In the video content comprising a large number of basic constitution units, the early-stage section sometimes comprises a plurality of basic constitution units.
(2) It is assumed that a last basic constitution unit of the video content including two or more basic constitution units is an end-stage section. In the video content comprising a large number of basic constitution units, the end-stage section sometimes comprises a plurality of basic constitution units.
(3) It is assumed that a portion of the video content including three or more basic constitution units except the early-stage and end-stage sections is a middle-stage section. Even in the video content having three or more basic constitution units, any middle-stage section is not defined by the intention of the content producer in some case.

The method of selecting and providing the summarized video content in accordance with the audience will be described hereinafter concretely.

In a method of determining the summarized video content, as described above, basic summarized video content is prepared and provided based on the content table (marker) information of the video metadata by the audience viewing time (or the position information of the video content) of the video content. However, it cannot be determined whether or not the prepared summarized video content is summarized video content optimum for the audience.

To solve the problem, the edition server 100 prepares audience trend information in preparing the summarized video content, and determines the summarized video content optimum for the audience.in accordance with the audience trend information.

The edition server 100 prepares the audience trend information using the audience information collected by .the log server 180 shown in FIG. 8, and the EPG operation history information collected by the audience information database 195 by the EPG server 130 shown in FIG. 9.

### (Audience Trend Information)

The audience trend information is concretely constituted of the following items.

### (1) Viewed Video Content

Category, viewing time, viewing time period, interrupted situation of the viewing (interrupted time, the number of repeat viewing times), video content viewing trends (EPG operation frequency, video reproduction control operation frequency)

### (2) Viewed Summarized Video Content

Viewing time, viewing time period, the number of utilizations of summarized video content, details of summarized video content (advertisement, outline, fixed time, table of content), summarized video content viewing trend (EPG operation frequency, summarized video reproduction control operation frequency)

To provide the summarized video content, the summarized video content to provide are determined in consideration of the audience trend information including the video content and the level of the summarized video content desired by the audience. For example, it is judged whether or not the audience selects the viewing of the summarized video content after interrupting the viewing of the video content. Audience trends are collected such as a case where the audience interrupts the viewing of the summarized video content and shifts to the viewing of the video content, and are utilized as providing conditions of the summarized video content.

As described above, concretely as shown in FIGS. 14 to 16, in addition to the summarized video content prepared by the content table (marker) information of the video metadata, the advertisement (video content) for the video content individually prepared by the content producer and the like are used as occasion demands, and the providing of the summarized video content in accordance with the audience taste is realized.

FIG. 14 shows a case where the viewing situation of the video content is interrupted in the early stage of the video content. As the summarized video content to be presented to the audience, an introducing advertisement video of the whole series in the case of a serial program, a spot video comprising the table of content of the video metadata, and first one-minute video are provided.

FIG. 15 shows a case where the viewing situation of the video content is interrupted in the middle stage of the video content. As the summarized video content to be presented to the audience, the introducing advertisement video of the video content, the spot video comprising the table of content of the video metadata, the spot video together with a video from the table of content of the video metadata in the vicinity of the interrupted position to the interrupted position, and a continuously edited video of the video in the vicinity of the table of content of the video metadata by a unit of several minutes are provided.

FIG. 16 shows a case where the viewing situation of the video content is interrupted in the end stage of the video content. As the summarized video content to be presented to the audience, the introducing advertisement video of the video content, the spot video comprising the table of content of the video metadata, the spot video together with the video from the table of content of the video metadata in the vicinity of the interrupted position to the interrupted position, and the continuously edited video of the video in the vicinity of the table of content of the video metadata by the unit of several minutes are provided.

### (Client's Operation)

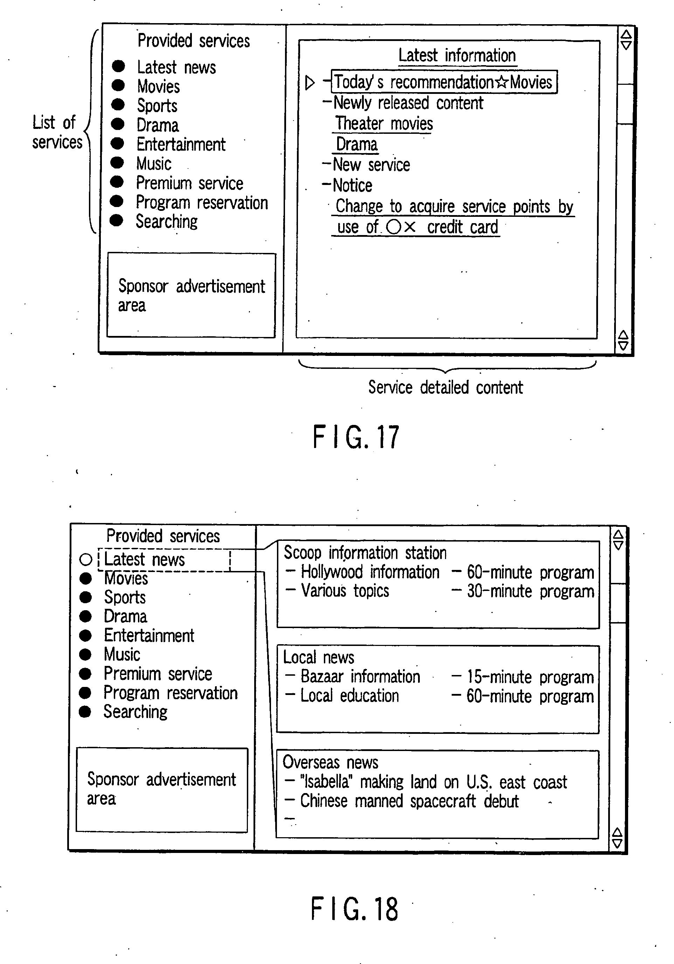

FIGS. 17, 18, 19, 20 are diagrams concerning the operation of the client 11.

As shown in FIG. 20, the audience presses the power button 17A of the remote controller 17 to thereby turn on a power supply, and starts the operation of the client 11.

The client 11 displays an initial screen for selecting services on the screen of the image display device 12 as shown in FIG. 17. The audience first views the initial screen, and confirms information provided on the side of a service provider.

The audience operates the item selection key 17C of the remote controller 17 to select an item, if there is any item that interests the audience in the initial screen, and determines the selected item by the operation of the determine key 17D. The selected item is linked with an information providing screen shown in FIG. 18 or 19. The client 11 switches the initial screen to the information providing screen. A list of provided services is displayed on the left side of the screen shown in FIG. 17. Even when the service is selected, the screen can shift to the information providing screen shown in FIG. 18 or 19.

By the above-described operation of the remote controller 17, the audience executes a menu operation to view the content provided on the service provider side, and searches and views desired video content.

### (Constitution of Client)

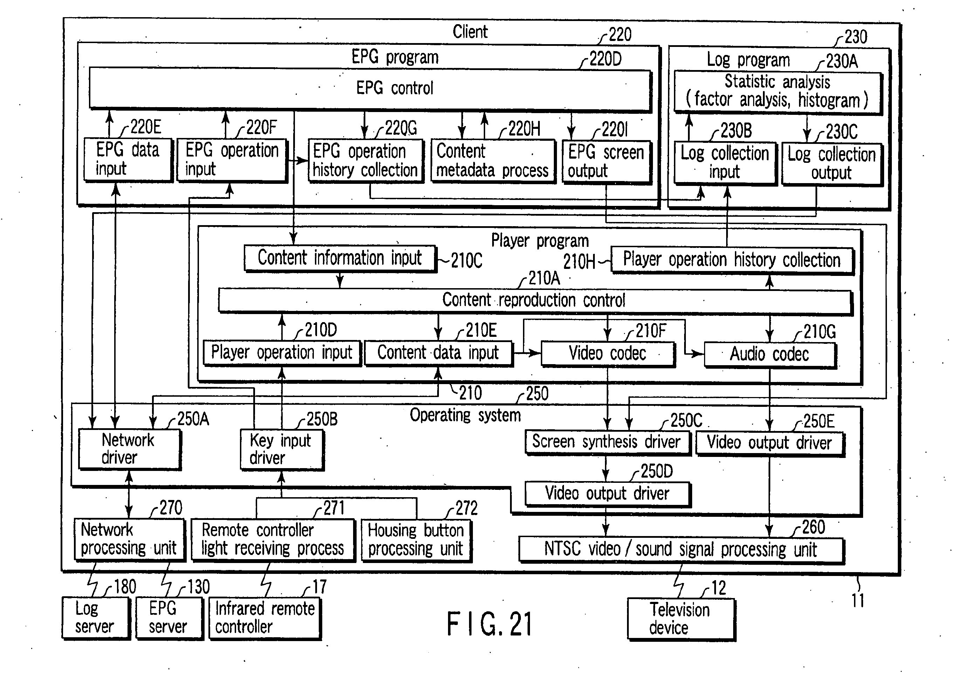

FIG. 21 is an explanatory view of a software constitution of the client 11.

As described with reference to FIG. 9, in the client 11, the EPG program 220 cooperates with the player program 210 to provide the service to the audience. In addition to these programs, the client 11 is provided with the log program 230 and a usual operating system 250.

The OS 250 has a network driver 250A, a key input driver 250B, a screen synthesis driver 250C, a video output driver 250D, and an audio output driver 250E. The network driver 250A executes a network control process with the EPG server 130 or the log server 180 of the distributing system 10 via a network processing unit 270.

The key input driver 250B executes an infrared communication control with the remote controller 17 via a light receiving processing unit 271. The key input driver 250B executes various button input control processes via a housing button processing unit 272 of the client 11. The video output driver 250D and the audio output driver 250E executes an output control of a video/sound signal with respect to the television receiver 12 via a video/sound signal processing unit 260.

### (EPG Program)

The EPG program 220 has an EPG control process unit 220D, an EPG data input processing unit 220E, an EPG operation input processing unit 220F, an EPG operation history collection processing unit 220G, a video metadata processing unit 220H, and an EPG screen output processing unit 220I. The EPG operation input processing unit 220F outputs key input codes from the remote controller 17 or a housing keyboard to the EPG control processing unit 220D, so that the audience operates the EPG program 220 or the player program 210. The audience performs an EPG operation input in accordance with the EPG information provided from the EPG program 220.

The video metadata processing unit 220H analyzes the video metadata collected by the EPG program 220, and converts the data as EPG information into screen data to be displayed. The EPG screen output processing unit 220I outputs the screen data by the video metadata processing unit 220H, or display data indicating the operation by the audience to the television device 12

### (Player Program)

The player program 210 has a content reproduction control unit 210A, a content information input processing unit 210C, a player operation input processing unit 210D, a content data input processing unit 210E, a video codec 210F, an audio codec 210G, and a player operation history collection processing unit 210H.

The content information input processing unit 210C inputs the video metadata into the content reproduction control unit 210A, which has been searched and selected to be viewed by the audience by the operation of the EPG program 220.

In the player operation input processing unit 210D, the audience inputs operations such as start, end, temporary stop of content viewing, interruption of the viewing, resuming of the viewing, fast forwarding, and rewinding with respect to the player program 210. The operation input with respect to the player program 210 is processed by the content reproduction control unit 210A.

The content data input processing unit 210E receives the video content transmitted from the VoD server 120 of the system 10 in accordance with the video metadata from the content reproduction control unit 210A, and outputs the content to the video codec 210F and the audio codec 210G. The video codec 210F and the audio codec 210G decode the video content, and reproduce the content as video and sound signals, respectively. The video and sound signals are output to the television receiver 12 by.the respective output drivers 250C to 250E of the OS 250.

### (Log Program)

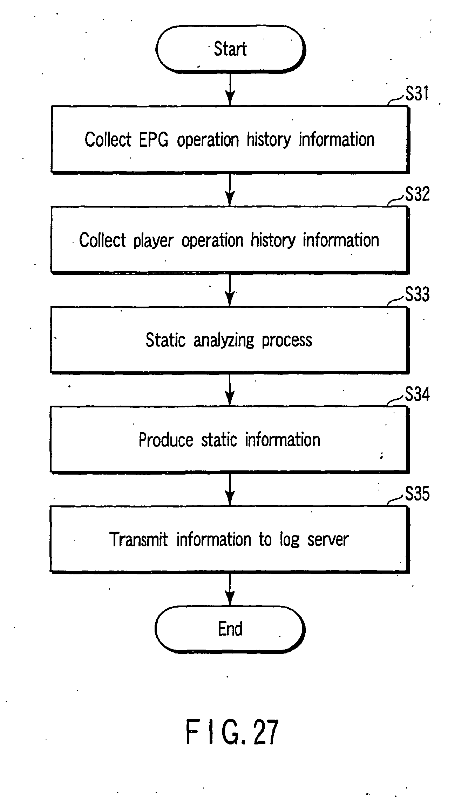

A process procedure of log information (operation history information) by the log program 230 will be described hereinafter with reference to a flowchart of FIG. 27 together with FIG. 21.

The log program 230 has a statistic analyzing process unit 230A, a log collection input process unit 230B, and a log collection output process unit 230C.

The log collection input processing unit 230B collects EPG operation history information collected by the EPG operation history collection processing unit 220G from the EPG control processing unit 220D as a history of the operation of the EPG program 220 by the audience (step S31).

Moreover, the log collection input processing unit 230B collects player operation history information collected from the content reproduction control unit 210A by the player operation history collection processing unit 210H as the history of the operation of the player program 210 by the audience.

The statistic analyzing processing unit 230A executes statistic analysis processes such as factor analysis and histogram analysis with respect to the operation history information collected by the log collection input processing unit 230B (step S33).

The log collection output processing unit 230C produces statistically analyzed statistic information, and transmits the information to the log server 180 of the system 10 (steps S34, S35).

### (Operation History Information)

Operation history information (log information of the client 11) collected from the EPG program 220 or the player program 210 concretely comprises the following items.

### (Log Information associated with EPG Program)

### (1) Audience Information

The information include information concerning the audience, including a contract code and a family code, acquired from contract information, viewing time information in which start time/end time of the player program 210 is recorded, and system operation time information in which the start time/end time of the EPG program 220 is recorded.

### (2) Remote Controller Operation Situation from Selection Start of Video Content to Viewing Start

This information includes EPG operation log information obtained by histogram totaling of the operation histories of the EPG program during the selecting/searching of the video content, the searching to the selecting of the video content, and video content selection time information which is history information between operations of a determination time until viewing start.

### (3) Metadata of Viewed Video Content

The information includes identification number information of viewed video content, accumulated viewing times information of the viewed video content, total viewing time information including a time from start until completion of the viewing, and a viewing interruption time and repeat viewing time for each video content and the like.

### (Log Information related to Player Program)

The information includes log information concerning a reproduction operation from the start until the end of the viewing of the video content, identification number information of the video content, and operation log information obtained by histogram totaling of the operation (reproduction, stop, chapter feeding, fast feeding, rewinding) of the player program during the viewing of the video content.

### (Viewing History Information)

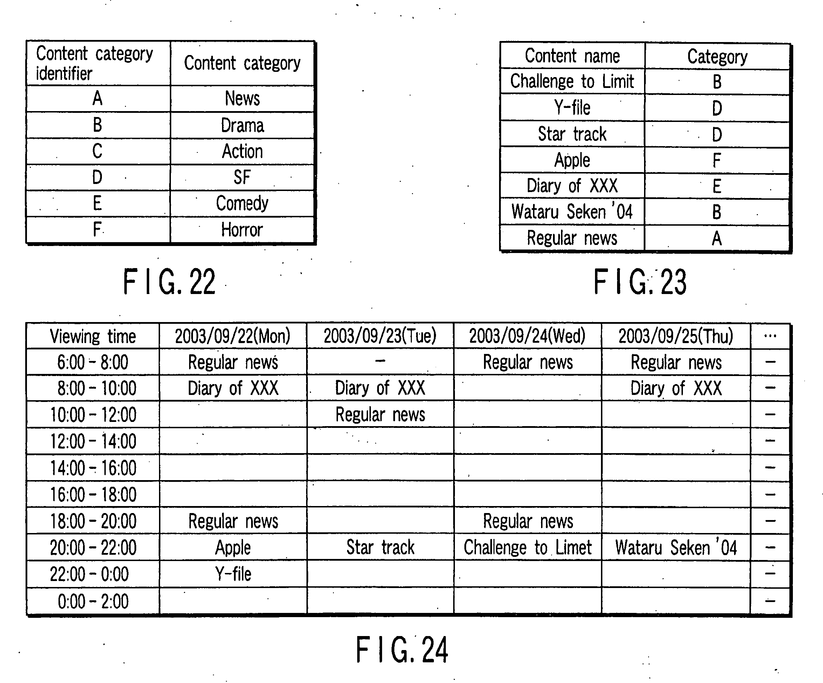

The log server 180 executes a process of producing viewing history information corresponding to content/category taste information shown in FIGS. 22, 23, 24 from the log information of the client 11, collected by the log program 230.

The log server 180 acquires subscriber or audience (family) information from the charging server 181 using a subscriber code or a family code as a key. The log server 180 totals viewing content by a unit of the subscriber or the audience (family). Viewing Content Information searches video metadata from the content server 110 using a content identifier shown in FIG. 22 as the key.

The totaling of the viewing content is performed by normalization at a ratio of the viewing time of the audience with respect to a providing time of the content. When the providing time of the content is 60 minutes, and the viewing time of the content is 30 minutes, the ratio is set to "0.5". When the viewing time is 120 minutes, the ratio is set to "2.0".

The log server 180 totals viewed content, and calculates probability of selection possibility among selected content with regard to the selection of the viewing content in a viewing time in one day. As a probability calculation method, a statistic probability method and a statistic analysis method such as Bayes' estimation and factor analysis are used. Concretely, as shown in FIG. 24, for example, correlation between a news program and a comedy program is supposed to be strong. An analysis result is stored as content taste information of each audience in the taste information database 190.

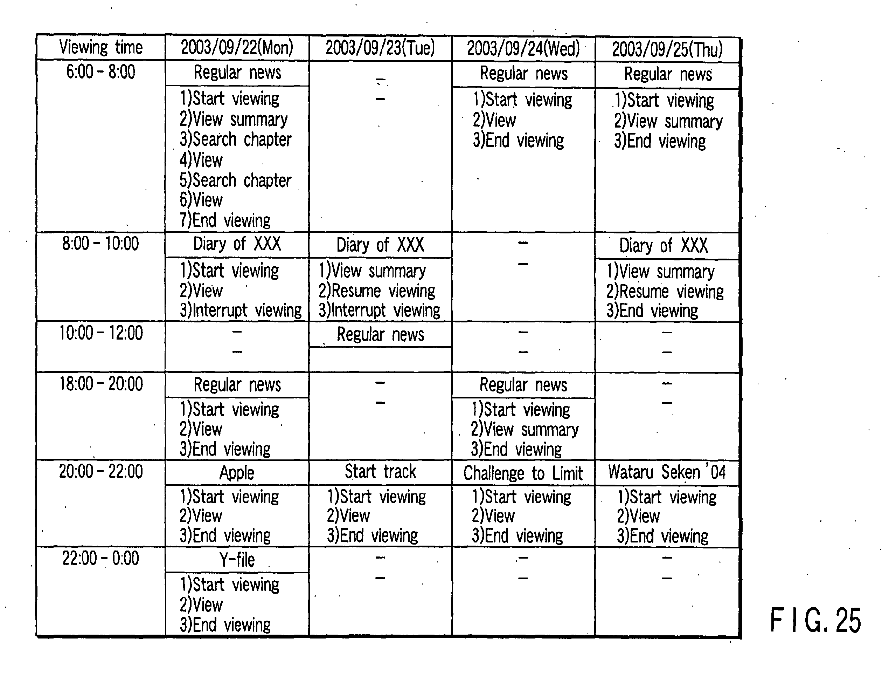

Next, the log server 180 produces audience history information corresponding to VoD or player operation taste information shown in FIG. 25.

Concretely, as to the selection of the viewing content in the viewing time in one day, operation log information of the player program 210 is totaled with respect to the viewed content, and peculiarity of the audience operation with respect to the content is calculated. Category information of the content is acquired from the video metadata of the viewed video content. Furthermore, player operation log information of the player program 210 is searched from content identifiers.

The log server 180 searches presence of a peculiar point (interrupting/resuming of the viewing, fast forwarding, etc.) in the operation with respect to the video content from the player operation log information. Furthermore, in the case of the interrupting/resuming of the viewing of the content, the information is added to evaluation of the content. For example, "1.2" is added to the total of the viewing content. In the case of only summary viewing or chapter searching in the viewing of the content, the normalization is performed in accordance with the viewing time. For example, assuming that a summary viewing time of 50-minutes content is only five minutes, "0.08" is added to the evaluation of the content.

The log server 180 adds analysis results as update information with respect to each audience content taste information, and stores the information in the taste information database 190.

### (Application of Taste Information to Summary Video)

When a viewing service of the summary video content concerning the video content which are viewing objects is selected by the audience, the EPG program 220 searches the video metadata from a local storage region or the EPG server 130 by the content identifiers.

The EPG program 220 searches the charging server 181 using the subscriber code or the family code as the key with respect to the audience information.

The EPG program 220 searches audience's taste information with respect to the log server 180 by the audience information and the video metadata. The log server 180 searches the following information from taste information stored in the database 190 by an audience unit:
(1) taste information of the corresponding video content; and
(2) taste information of categories of the corresponding video content.

The EPG program 220 transmits the acquired taste information to the edition server 100 via the EPG server 130.

It is assumed that the taste information is parameter N. The edition server 100 selects standard summarized video content in the case of "N = 1.0", prepares a reduced version of the standard summarized video content in the case of "1.0 > N > 0", and selects the detailed summarized video content in the case of "N > 1.0".

The edition server 100 transmits the prepared summarized video content to the VoD server 120. The VoD server 120 distributes the summarized video content to the client 11.

As described above, in the video distributing service by the digital video distributing service 10 and the client 11 of the present embodiment, the summarized video content fit for the audience tastes can be provided, for example, immediately before the start of the video viewing. Therefore, a degree of customer's satisfaction with the video providing service to the audience can be enhanced.

Moreover, in the providing service of the video content, the summarized video content suitable for the audience are provided as the service, and accordingly more information can be given to the audience. For example, skip viewing of the news program or the like is possible.

Furthermore, the summarized video content are provided with respect to all the content presented to the audience as occasion demands, accordingly a degree of exposure of the video content is raised, and an interest into the viewing of the video content in a broad range can be promoted. Furthermore, to provide the audience with optimum summarized video content, the audience's viewing trends of the video content are measured, and the presentation of the video content that interest the audience or the presentation of the advertisement can be realized.

According to the present embodiment, when the system for realizing the digital video distributing service is constructed, it is possible to provide the summarized video content data supposed to be useful for the audience, and therefore useful and diversified digital video distributing services can be realized.

## Claims

1. A system for distributing digital video data to a terminal device (11), comprising:
a viewing information unit (130) which is adapted to acquire viewing information concerning viewing of video data for each audience who operates the terminal device; and
a metadata acquisition unit (110) which is adapted to acquire video content data of a distribution object and video metadata corresponding to the video content data;
**characterized by** further comprising
a summarized video production unit (100) which is adapted to produce basic summarized video content data based on the video metadata, to produce audience trend information using the viewing information, including viewins interrupt position (SP) and to determine summarized video content data up to the viewius interrupt position (SP) and optimum for audience from the basic summarized video content data in accordance with the audience trend information.

2. The system according to claim 1, **characterized in that** the summarized video production unit (100) is adapted to produce the audience trend information using the viewing information and operation history information concerning the audience's operation history.

3. The system according to claim 1, **characterized in that:**
the summarized video production unit (100) is adapted to produce the audience trend information using the viewing information, operation history information concerning the audience's operation history and taste information with respect to the video content data for each audience.

4. A method of distributing digital video content data to a terminal device (11) in a digital video distributing system, the method comprising the steps of:
acquiring viewing information concerning viewing of the video content data for each audience who operates the terminal device; and
acquiring video content data of a distribution object and video metadata corresponding to the video content data;
**characterized by**
producing basic summarized video content based on the video metadata
; producing audience trend information using the viewing information , including viewing interrupt position and
determining summarized video content up to the viewing interrupt position (SP) and optimum for the audience from the basic summarized video content in accordance with the audience trend information.

5. The method according to claim 4, **characterized in that** the producing step produces the audience trend information using the viewing information and operation history information concerning the audience's operation history.

6. The method according to claim 4, **characterized in that** the producing step produces the audience trend information using the viewing information, operation history information concerning the audience's operation history and taste information respect to the video content data for each audience.

## Patentansprüche

1. System zur Verteilung von digitalen Videodaten an eine Terminaleinrichtung (11), mit:
einer Betrachtungsinformationseinheit (130), die angepasst ist, um Betrachtungsinformation betreffend der Betrachtung von Videodaten für jedes Publikum zu erfassen, das die Terminaleinrichtung bedient; und
einer Metadatenerfassungseinheit (110), die angepasst ist, um Videoinhaltsdaten eines Verteilungsobjekts und Videometadaten entsprechend der Videoinhaltsdaten zu erfassen;
ferner **gekennzeichnet durch**
eine Zusammenfassungsvideoproduktionseinheit (100), die angepasst ist, um grundlegende Zusammenfassungsvideoinhaltsdaten basierend auf den Videometadaten zu erzeugen, Publikumstrendinformation mit der Betrachtungsinformation einschließlich der Betrachtungsunterbrechungsposition (SP) zu erzeugen, und Zusammenfassungsvideoinhaltsdaten bis zu der Betrachtungsunterbrechungsposition (SP) und optimal für ein Publikum aus den grundlegenden Zusammenfassungsvideoinhaltsdaten in Übereinstimmung mit der Publikumstrendinformation zu bestimmen.

2. System gemäß Anspruch 1, **dadurch gekennzeichnet, dass** die Zusammenfassungsvideoproduktionseinheit (100) angepasst ist, um die Publikumstrendinformation mit der Betrachtungsinformation und der Betriebshistorieinformation betreffend der Betriebshistorie des Publikums zu erzeugen.

3. System gemäß Anspruch 1, **dadurch gekennzeichnet, dass** die Zusammenfassungsvideoproduktionseinheit (100) angepasst ist, um die Publikumstrendinformation mit der Betrachtungsinformation, der Betriebshistorieinformation betreffend der Betriebshistorie des Publikums und der Geschmacksinformation mit Bezug auf die Videoinhaltsdaten für jedes Publikum zu erzeugen.

4. Verfahren zur Verteilung von digitalen Videodaten an eine Terminaleinrichtung (11) in einem digitalen Videodatenverteilungssystem, mit den folgenden Schritten:
Erfassen von Betrachtungsinformation betreffend der Betrachtung der Videoinhaltsdaten für jedes Publikum, das die Terminaleinrichtung bedient; und
Erfassen von Videoinhaltsdaten eines Verteilungsobjekts und Videometadaten entsprechend den Videoinhaltsdaten;
**gekennzeichnet durch**
Erzeugen von grundlegenden Zusammenfassungsvideoinhaltsdaten basierend auf den Videometadaten;
Erzeugen von Publikumstrendinformation mit der Betrachtungsinformation einschließlich der Betrachtungsunterbrechungsposition; und
Bestimmen von Zusammenfassungsvideoinhaltsdaten bis zu der Betrachtungsunterbrechungsposition (SP) und das Optimum für das Publikum aus den grundlegenden Zusammenfassungsvideoinhaltsdaten in Übereinstimmung mit der Publikumstrendinformation.

5. Verfahren gemäß Anspruch 4, **dadurch gekennzeichnet, dass** der Erzeugungsschritt die Publikumstrendinformation mit der Betrachtungsinformation und der Betriebshistorieinformation betreffend der Betriebshistorie des Publikums erzeugt.

6. Verfahren gemäß Anspruch 4, **dadurch gekennzeichnet, dass** der Erzeugungsschritt die Publikumstrendinformation mit der Betrachtungsinformation, der Betriebshistorieinformation betreffend der Betriebshistorie des Publikums und der Geschmacksinformation mit Bezug auf die Videoinhaltsdaten für jedes Publikum erzeugt.

## Revendications

1. Système pour distribuer des données vidéo numériques sur un dispositif de terminal (11), comprenant :
une unité d'information de visualisation (130) qui est adaptée pour acquérir une information de visualisation concernant la visualisation de données vidéo pour chaque audience qui fait fonctionner le dispositif de terminal ; et
une unité d'acquisition de méta-données (110) qui est adaptée pour acquérir des données de contenu vidéo d'un objet de distribution et des méta-données vidéo correspondant aux données de contenu vidéo,
**caractérisé en ce qu'**il comprend en outre :
une unité de production de vidéo résumée (100) qui est adaptée pour produire des données de contenu vidéo résumées de base sur la base des méta-données vidéo, pour produire une information de tendance d'audience en utilisant l'information de visualisation incluant une position d'interruption de visualisation et pour déterminer des données de contenu vidéo résumées jusqu'à la position d'interruption de visualisation (SP) et optimum pour l'audience à partir des données de contenu vidéo résumées de base conformément à l'information de tendance d'audience.

2. Système selon la revendication 1, **caractérisé en ce que** l'unité de production de vidéo résumée (100) est adaptée pour produire l'information de tendance d'audience en utilisant l'information de visualisation et une information d'historique de fonctionnement concernant l'historique de fonctionnement d'audience.

3. Système selon la revendication 1, **caractérisé en ce que :**
l'unité de production de vidéo résumée (100) est adaptée pour produire l'information de tendance d'audience en utilisant l'information de visualisation, une information d'historique de fonctionnement concernant l'historique de fonctionnement d'audience et une information de goût en relation avec les données de contenu vidéo pour chaque audience.

4. Procédé de distribution de données de contenu vidéo numériques sur un dispositif de terminal (11) dans un système de distribution vidéo numérique, le procédé comprenant les étapes de :
acquisition d'une information de visualisation concernant la visualisation des données de contenu vidéo pour chaque audience qui fait fonctionner le dispositif de terminal ; et
acquisition de données de contenu vidéo d'un objet de distribution et de méta-données vidéo correspondant aux données de contenu vidéo,
**caractérisé par** :
la production d'un contenu vidéo résumé de base sur la base des méta-données vidéo ;
la production d'une information de tendance d'audience en utilisant l'information de visualisation incluant une position d'interruption de visualisation ; et
la détermination d'un contenu de vidéo résumé jusqu'à la position d'interruption de visualisation (SP) et optimum pour l'audience à partir du contenu vidéo résumé de base conformément à l'information de tendance d'audience.

5. Procédé selon la revendication 4, **caractérisé en ce que** l'étape de production produit l'information de tendance d'audience en utilisant l'information de visualisation et une information d'historique de fonctionnement concernant l'historique de fonctionnement d'audience.

6. Procédé selon la revendication 4, **caractérisé en ce que** l'étape de production produit l'information de tendance d'audience en utilisant l'information de visualisation, une information d'historique de fonctionnement concernant l'historique de fonctionnement d'audience et une information de goût en relation avec les données de contenu vidéo pour chaque audience.
